# EUROPEAN PATENT SPECIFICATION

(11) **EP 4 489 197 B1**
(45) Date of publication and mention of the grant of the patent: **26.11.2025**
(21) Application number: 24178284.6
(22) Date of filing: 27.05.2024
(51) Int. Cl.: H01M 50/209, H01M 50/287, H01M 50/289, H01M 50/503, H01M 50/507

(54) **BATTERY PACK**
BATTERIEPACK
BLOC-BATTERIE

(30) Priority: 04.07.2023 JP 2023110143
(43) Date of publication of application: 08.01.2025
(73) Proprietor: Prime Planet Energy & Solutions, Inc., Chuo-ku Tokyo 103-0022 (JP)
(72) Inventor: INAMURA, Takashi, Tokyo, 103-0022 (JP)
(74) Representative: Kuhnen & Wacker Patent- und Rechtsanwaltsbüro PartG mbB

(56) References cited:
- JP-A- 2022 547 145

## Description

### BACKGROUND OF THE INVENTION

### Field of the Invention

The present technology relates to a battery pack.

### Description of the Background Art

The specification of Chinese Utility Model No. 217468616 indicates a Cell-to-Pack structure in which a stack including a plurality of battery cells is directly accommodated in a case without using end plates and binding bars (module structure) that restrain the plurality of battery cells.

JP2022547145A discloses a battery module including: a battery cell stack in which a plurality of battery cells are stacked, a module frame for housing the battery cell stack, and a busbar frame for covering the front and rear surfaces of the battery cell stack, wherein the busbar frame includes a first busbar frame and a second busbar frame coupled along a stacking direction of the battery cell stack, and wherein a protrusion part is formed on one side of the first busbar frame, a groove part is formed on one side of the second busbar frame, and the protrusion part is coupled to the groove part, so that the first busbar frame and the second busbar frame are connected.

### SUMMARY OF THE INVENTION

In a structure in which a bus bar module formed into a module by accommodating a plurality of bus bars in a plate member is mounted on a stack of a plurality of battery cells, when positioning the bus bar module, a binding bar can be used as a fixing portion for positioning in the case of a module structure, for example; however, since no binding bar exists in the Cell-to-Pack structure, a mechanism different from that in a battery pack having the module structure is required.

It is an object of the present technology to provide a battery pack in which a bus bar module can be precisely positioned also in a Cell-to-Pack structure.

The present technology provides the following battery pack.
[1] A battery pack comprising: a first stack including a plurality of first battery cells arranged side by side in a first direction; a second stack that is adjacent to the first stack in a second direction orthogonal to the first direction and that includes a plurality of second battery cells arranged side by side in the first direction; a case that has a side wall facing the first stack and the second stack in the first direction and that accommodates the first stack and the second stack; a first bus bar module including a first bus bar that electrically connects the plurality of first battery cells and a first plate member that accommodates the first bus bar, the first bus bar module being disposed on the first stack; and a second bus bar module including a second bus bar that electrically connects the plurality of second battery cells and a second plate member that accommodates the second bus bar, the second bus bar module being disposed on the second stack, wherein at least one of the first bus bar module and the second bus bar module has a first positioning mechanism that has an inserted portion between the first stack and the second stack and that positions the first bus bar module or the second bus bar module in the second direction.
[2] The battery pack according to [1], wherein the inserted portion of the first positioning mechanism is press-fitted between the first stack and the second stack.
[3] The battery pack according to [1] or [2], wherein the inserted portion of the first positioning mechanism has a bilaterally asymmetrical shape when viewed in the first direction.
[4] The battery pack according to [3], wherein the inserted portion of the first positioning mechanism has a thick portion and a thin portion.
[5] The battery pack according to any one of [1] to [4], wherein the first plate member includes a first projecting portion protruding from an end surface of the first plate member to the second stack side along the second direction, and a bottom portion of the first projecting portion is in abutment with at least one of the plurality of first battery cells and at least one of the plurality of second battery cells.
[6] The battery pack according to [5], wherein the second plate member includes a second projecting portion protruding from an end surface of the second plate member to the first stack side along the second direction, and a bottom portion of the second projecting portion is in abutment with at least one of the plurality of first battery cells and at least one of the plurality of second battery cells.
[7] The battery pack according to any one of [1] to [6], wherein each of the plurality of first battery cells has an upper surface facing the first plate member, the first plate member has a bottom surface facing the upper surfaces of the plurality of first battery cells, and a protruding rib protruding from the bottom surface of the first plate member toward the upper surfaces of the plurality of first battery cells is provided on a portion of the bottom surface of the first plate member, and the protruding rib is in abutment with the upper surfaces of the plurality of first battery cells.
[8] The battery pack according to any one of [1] to [7], wherein each of the first plate member and the second plate member has a second positioning mechanism that positions a corresponding one of the first bus bar module and the second bus bar module in the first direction by biasing the side wall of the case.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a battery pack.
Fig. 2 is a perspective view of a battery cell.
Fig. 3 is a top view of a plate member of a bus bar module.
Fig. 4 is a perspective view showing a structure around a bus bar.
Fig. 5 is a diagram showing a positioning mechanism of the bus bar module in the Y axis direction.
Fig. 6 is a perspective view showing a structure between the bus bar module and an upper surface of the battery cell.
Fig. 7 is a perspective view showing a rear surface of the plate member of the bus bar module.
Fig. 8 is a diagram showing the positioning mechanism of the bus bar module in the X axis direction.
Fig. 9 is a first diagram showing a modification of the positioning mechanism shown in Fig. 8.
Fig. 10 is a second diagram showing a modification of the positioning mechanism shown in Fig. 8.
Fig. 11 is a third diagram showing a modification of the positioning mechanism shown in Fig. 8.
Fig. 12 is a fourth diagram showing a modification of the positioning mechanism shown in Fig. 8.
Fig. 13 is a fifth diagram showing a modification of the positioning mechanism shown in Fig. 8.
Fig. 14 is a sixth diagram showing a modification of the positioning mechanism shown in Fig. 8.
Fig. 15 is a seventh diagram showing a modification of the positioning mechanism shown in Fig. 8.
Fig. 16 is an eighth diagram showing a modification of the positioning mechanism shown in Fig. 8.
Fig. 17 is a ninth diagram showing a modification of the positioning mechanism shown in Fig. 8.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the "battery pack" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

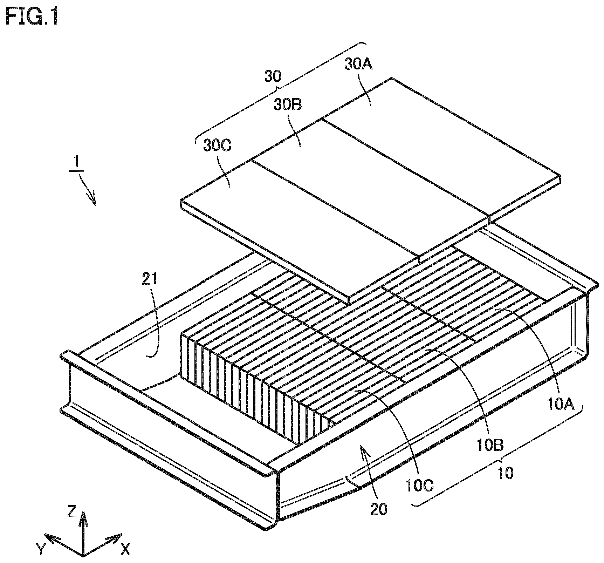

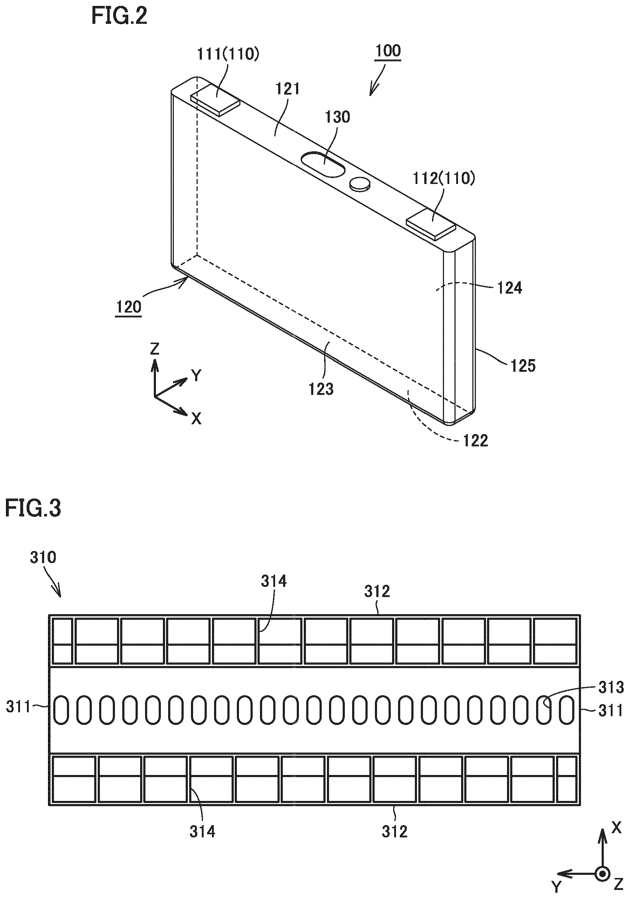

Fig. 1 is an exploded perspective view of a battery pack 1. As shown in Fig. 1, battery pack 1 includes: stacks 10 each including a plurality of battery cells 100 (see Fig. 2) arranged side by side in the Y axis direction (first direction); a case 20 that accommodates stacks 10; and bus bar modules 30 disposed on stacks 10.

Stacks 10 include a stack 10A (first stack), a stack 10B (second stack), and a stack 10C (third stack). Stacks 10A, 10B are adjacent to each other in the X axis direction (second direction). Stacks 10B, 10C are adjacent to each other in the X axis direction.

Case 20 has side walls 21 facing stacks 10A, 10B, 10C in the Y axis direction. Side walls 21 directly support stacks 10A, 10B, 10C from both sides in the Y axis direction. Thus, battery pack 1 according to the present embodiment employs a Cell-to-Pack structure in which stacks 10 each including the plurality of battery cells 100 are directly stored in the case.

Bus bar modules 30 include: a bus bar module 30A (first bus bar module) disposed on stack 10A; a bus bar module 30B (second bus bar module) disposed on stack 10B; and a bus bar module 30C (third bus bar module) disposed on stack 10C.

Fig. 2 is a perspective view showing a configuration of a battery cell 100 included in each of stacks 10A, 10B, 10C. As shown in Fig. 2, battery cell 100 has a prismatic shape. Battery cell 100 has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along an X axis direction (second direction) orthogonal to a Y axis direction (first direction). Positive electrode terminal 111 and negative electrode terminal 112 are provided to be separated from each other in the X axis direction.

Housing 120 has a substantially rectangular parallelepiped shape. An electrode assembly (not shown) and an electrolyte solution (not shown) are accommodated in housing 120. Housing 120 includes an upper surface 121, a lower surface 122, a first side surface 123, a second side surface 124, and a third side surface 125.

Upper surface 121 is a flat surface orthogonal to the Z axis direction. Electrode terminals 110 are disposed on upper surface 121. Lower surface 122 faces upper surface 121 along the Z axis direction (third direction) orthogonal to the Y axis direction (first direction) and the X axis direction (second direction).

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When internal pressure of housing 120 becomes more than or equal to a predetermined value due to gas generated inside housing 120, gas-discharge valve 130 is opened to discharge the gas to the outside of housing 120.

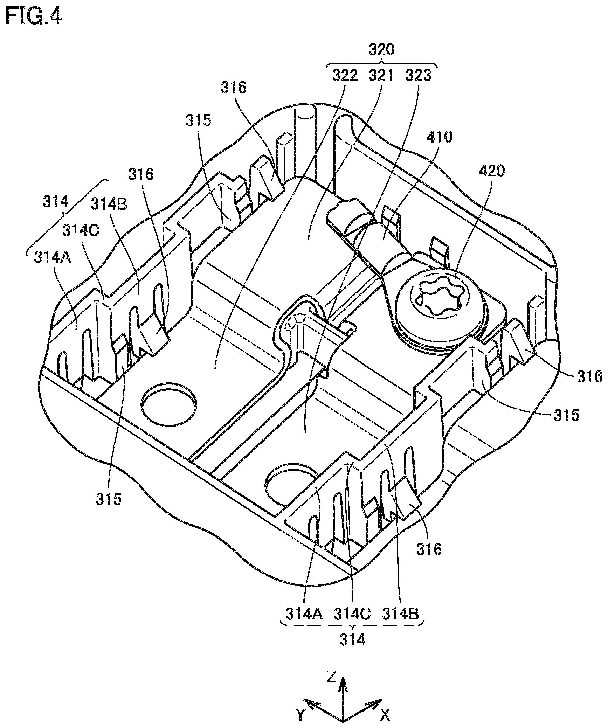

Next, a basic configuration of each bus bar module 30 will be described with reference to Figs. 3 and 4. Fig. 3 is a top view of a plate member 310 included in bus bar module 30. Fig. 4 is a perspective view showing a structure around a bus bar 320 in bus bar module 30.

Each of bus bar modules 30A, 30B, 30C includes plate member 310 shown in Fig. 3. As shown in Fig. 3, plate member 310 includes: end surfaces 311 located at end portions in the Y axis direction; end surfaces 312 located at end portions in the X axis direction; through holes 313 formed at positions corresponding to gas-discharge valves 130 of battery cells 100; and wall portions 314 that partition a space on plate member 310 into a plurality of spaces.

As shown in Fig. 4, bus bar 320 is accommodated in each space partitioned by wall portion 314. Bus bar 320 is composed of a conductor (typically, a metal member). Bus bar 320 electrically connects electrode terminals 110 of the plurality of battery cells 100 to each other. Bus bar 320 includes: a root portion 321 extending in the Y axis direction; and a connection portion 322 (first connection portion) and a connection portion 323 (second connection portion) each protruding from root portion 321 in the X axis direction. Connection portions 322, 323 are each connected to electrode terminals 110 of two adjacent battery cells 100 in the Y axis direction.

Wall portion 314 of plate member 310 includes a first portion 314A, a second portion 314B, and a third portion 314C. First portion 314A and second portion 314B are formed to extend in the X axis direction. First portion 314A and second portion 314B are located at positions separated from each other in the Y axis direction. Third portion 314C connects first portion 314A and second portion 314B.

Ribs 315 and locks 316 are formed in wall portion 314. Ribs 315 protrude from positions adjacent to third portion 314C of wall portion 314 to both sides in the Y axis direction. Ribs 315 position the plurality of adjacent bus bars 320 in the Y axis direction. Locks 316 lock bus bars 320 in the Z axis direction. The shapes and arrangements of ribs 315 and locks 316 are not limited to those shown in Fig. 4, and can be appropriately changed.

Bus bar 320 is connected to a wiring 410. Wiring 410 is fixed to bus bar 320 by a screw 420. The implementations of wiring 410 and screw 420 are not limited to those shown in Fig. 4, and the wiring may be constituted of, for example, a flexible wiring board.

Electrode terminal 110 of battery cell 100 and bus bar 320 are positioned relative to each other in the X axis direction and the Y axis direction and are then welded and joined to each other. By precisely performing this positioning, the step of welding electrode terminal 110 and bus bar 320 can be performed in a highly efficient and high-quality manner. When accommodating bus bar 320 in the space partitioned by wall portion 314, bus bar 320 is precisely positioned with respect to plate member 310 in the X axis direction and the Y axis direction. Therefore, plate member 310 and stack 10 are required to be positioned precisely.

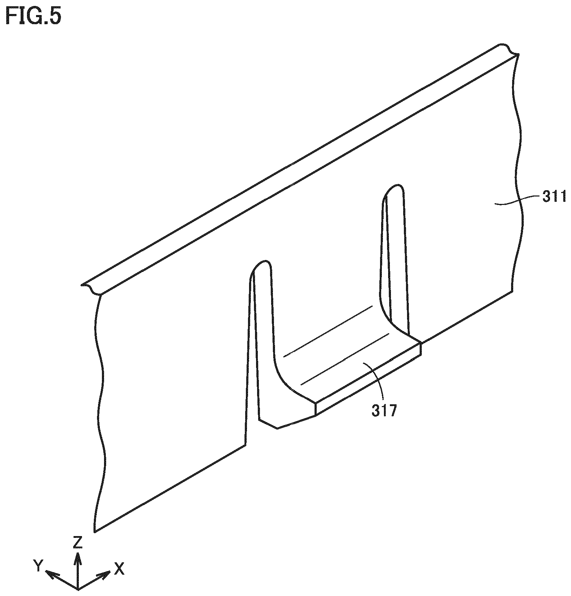

A positioning mechanism of bus bar module 30 (plate member 310) according to the present embodiment will be described with reference to Figs. 5 to 8.

Fig. 5 is a diagram showing the positioning mechanism of bus bar module 30 in the Y axis direction. As shown in Fig. 5, plate member 310 of bus bar module 30 has a positioning mechanism 317 that positions bus bar module 30 in the Y axis direction by biasing side wall 21 of case 20.

Positioning mechanism 317 shown in Fig. 5 is constituted of a protuberance having a snap-fit shape and formed at end surface 311 of plate member 310. The protuberance constituting positioning mechanism 317 protrudes from end surface 311 of plate member 310 to the side wall 21 side. When installing plate member 310 in case 20, positioning mechanism 317 presses side wall 21 of case 20 to bias plate member 310 toward a predetermined position. As a result, bus bar module 30 is positioned in the Y axis direction.

Positioning mechanism 317 may be provided at each of end surfaces 311 of plate member 310 on the both sides in the Y axis direction, or may be provided only at end surface 311 of plate member 310 on one side in the Y axis direction. When positioning mechanisms 317 are provided on the both sides in the Y axis direction, plate member 310 is biased toward the center of case 20 in the Y axis direction, and is positioned at a position at which biasing forces by positioning mechanisms 317 on the both sides are balanced. When positioning mechanism 317 is provided on one side in the Y axis direction, plate member 310 is biased toward side wall 21 opposite to the side on which positioning mechanism 317 is provided, and is positioned with side wall 21 serving as a reference plane.

The protuberance constituting positioning mechanism 317 is deformed toward the central side of stack 10 as a reaction to the pressing of side wall 21 of case 20. On this occasion, positioning mechanism 317 is preferably located at a position so as not to interfere with gas-discharge valve 130 when viewed in the Z axis direction. In this way, bus bar module 30 can be positioned in the Y axis direction without affecting discharging of the gas from gas-discharge valve 130 of battery cell 100 located at the end portion in the Y axis direction.

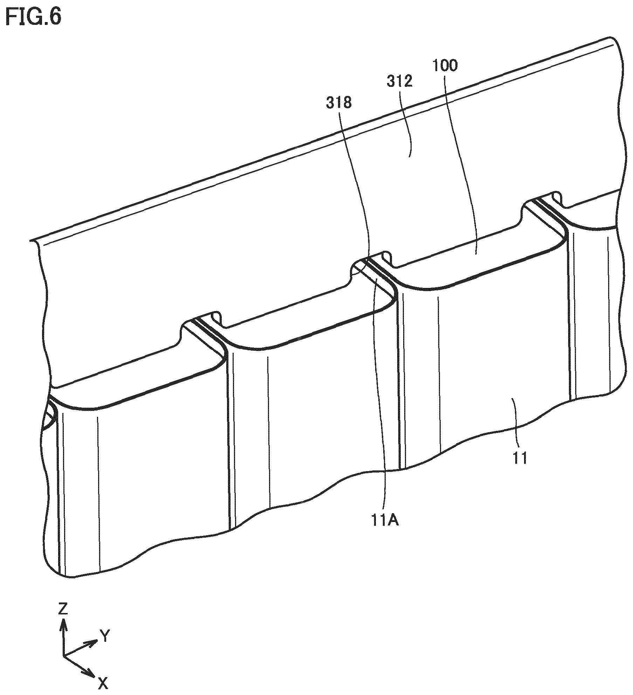

Fig. 6 is a perspective view showing a structure between bus bar module 30 and upper surface 121 of battery cell 100.

As shown in Fig. 6, stack 10 includes a separator 11 provided between the plurality of battery cells 100. Separator 11 may be a film or tape that covers first side surface 123, second side surface 124, and third side surface 125 of battery cell 100. Separator 11 may be a film that wraps around housing 120. Separator 11 may be a plate-shaped member (plate) interposed between battery cells 100 adjacent to each other. Separator 11 can be also formed by combining the film or tape with the plate-shaped member. Separator 11 has a protrusion 11A that protrudes to the plate member 310 side with respect to the plurality of battery cells 100. Plate member 310 is provided with a recess 318 that avoids protrusion 11A of separator 11.

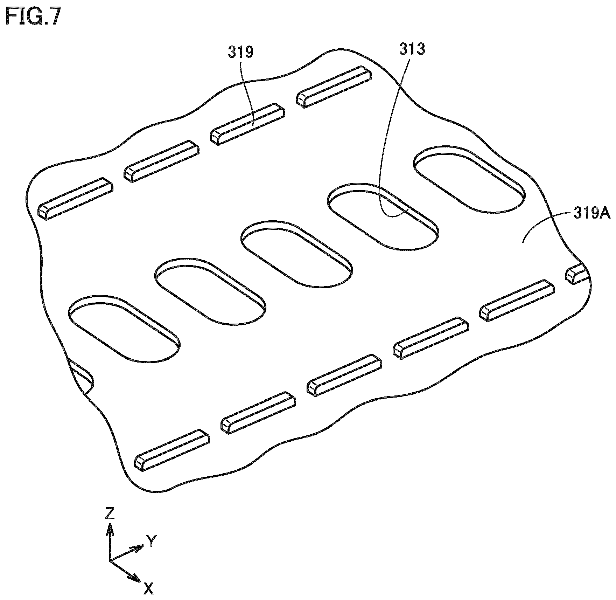

Fig. 7 is a perspective view showing the rear surface of plate member 310. As shown in Fig. 7, plate member 310 has a bottom surface 319A. Bottom surface 319A faces the upper surface of each battery cell 100. Protruding ribs 319 each protruding from bottom surface 319A of plate member 310 toward upper surface 121 of battery cell 100 are provided on portions of bottom surface 319A of plate member 310. Protruding ribs 319 are in abutment with upper surfaces 121 of battery cells 100. In the example of Fig. 7, protruding ribs 319 are intermittently formed on both sides beside through holes 313 so as to extend in the Y axis direction.

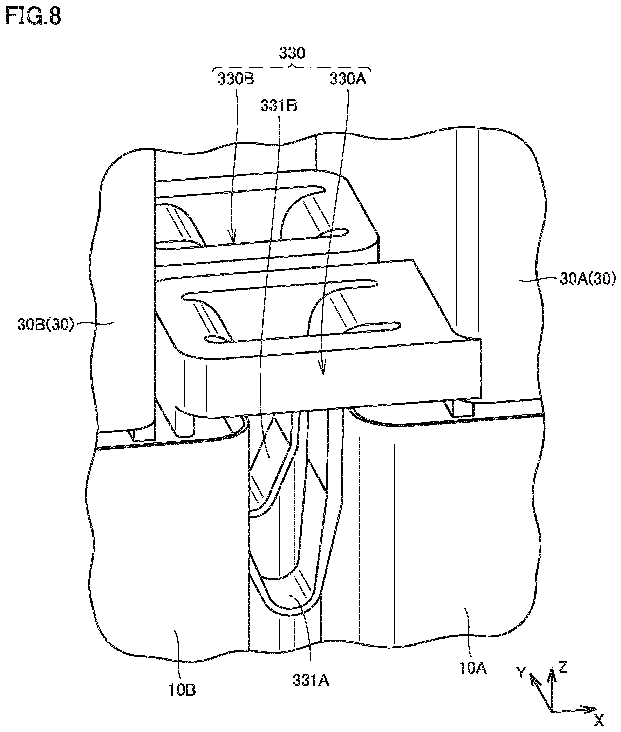

Fig. 8 is a diagram showing a positioning mechanism of bus bar module 30 in the X axis direction. As shown in Fig. 8, bus bar module 30 has a positioning mechanism 330 inserted between two adjacent stacks (stacks 10A, 10B in the example of Fig. 8) to position bus bar module 30 in the X axis direction. In the example of Fig. 8, bus bar module 30A has a positioning mechanism 330A and bus bar module 30B has a positioning mechanism 330B; however, the scope of the present technology is not limited to the configuration in which all the bus bar modules 30 have positioning mechanisms 330, and only part of the plurality of bus bar modules 30 may have positioning mechanism(s) 330.

Positioning mechanism 330A has an insertion portion 331A press-fitted between stacks 10A, 10B. When insertion portion 331A is press-fitted between stacks 10A, 10B, bus bar module 30A is biased in a direction away from stack 10B. On this occasion, insertion portion 331A is brought into abutment with the side surface of stack 10A, thereby positioning bus bar module 30A in the X axis direction.

Positioning mechanism 330B has an insertion portion 331B press-fitted between stacks 10A, 10B. When insertion portion 331B is press-fitted between stacks 10A, 10B, bus bar module 30B is biased in a direction away from stack 10A. On this occasion, insertion portion 331B is brought into abutment with the side surface of stack 10B, thereby positioning bus bar module 30B in the X axis direction.

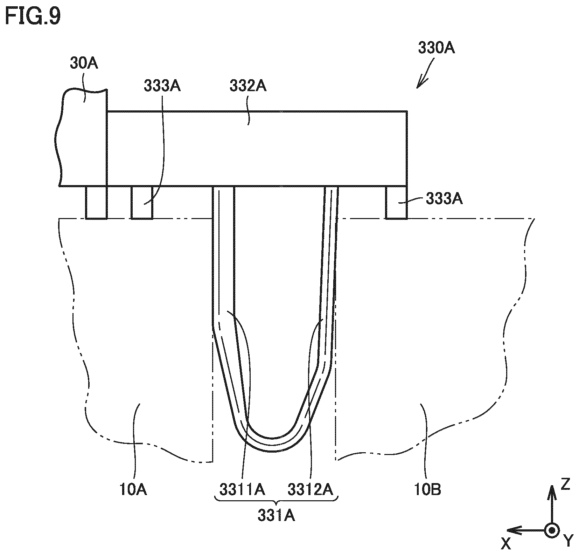

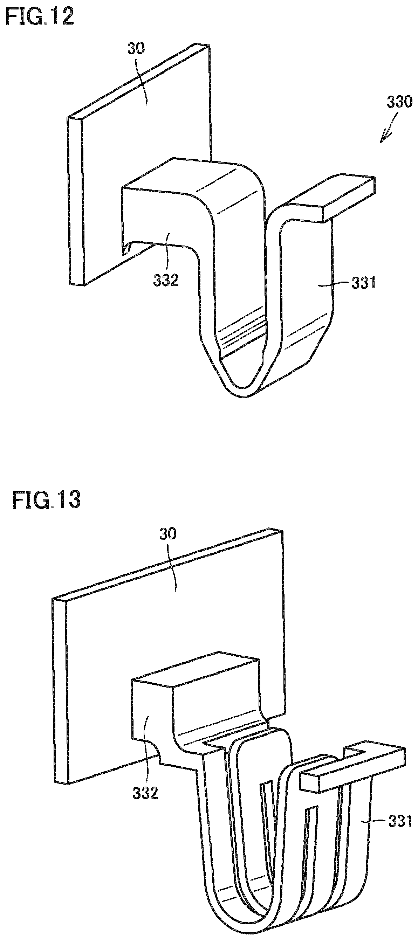

Each of Figs. 9 to 17 is a diagram showing a modification of the positioning mechanism in the X axis direction. A positioning mechanism 330A shown in Fig. 9 is included in bus bar module 30A provided on stack 10A, and includes: an insertion portion 331A press-fitted between stacks 10A, 10B; and a projecting portion 332A protruding in the X axis direction from end surface 312 of plate member 310. Insertion portion 331A is provided to protrude from projecting portion 332A in the Z axis direction. Protrusions 333A each protruding toward upper surface 121 of battery cell 100 are provided at a bottom portion of projecting portion 332B.

When insertion portion 331A is press-fitted between stacks 10A, 10B, protrusions 333A are brought into abutment with upper surface 121 of battery cell 100 of stack 10A and upper surface 121 of battery cell 100 of stack 10B. That is, insertion portion 331A is press-fitted to a position at which protrusions 333A are brought into abutment with upper surfaces 121 of battery cells 100. This press-fitting is performed by pressing projecting portion 332A to the stack 10 side (downward) by a human hand (finger).

Insertion portion 331A shown in Fig. 9 has a bilaterally asymmetrical shape when viewed in the Y axis direction. Insertion portion 331A has a thick portion 3311A and a thin portion 3312A. In positioning mechanism 330B included in bus bar module 30B provided on stack 10B, the same structure as that of positioning mechanism 330A may be employed.

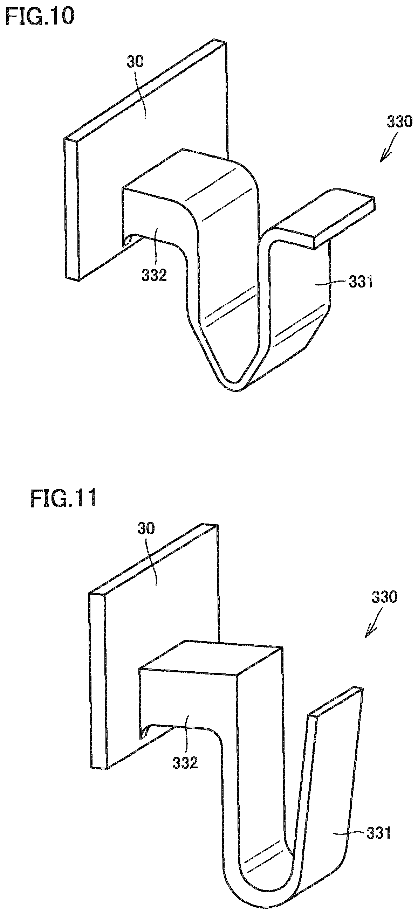

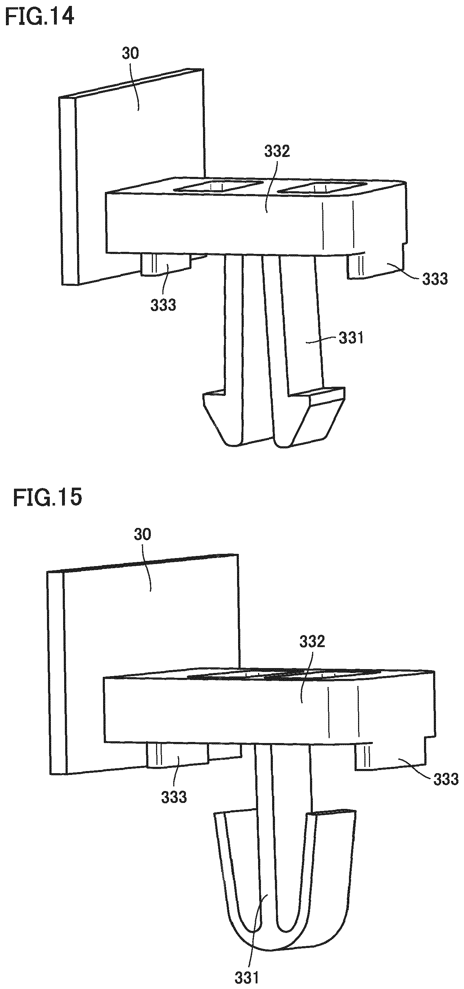

As in each of examples shown in Figs. 10 to 13, positioning mechanism 330 may be provided with no protrusions 333, or as in each of examples shown in Figs. 14 to 17, positioning mechanism 330 may be provided with protrusions 333 at the bottom portion of projecting portion 332. In consideration of more precisely managing an amount of pushing insertion portion 331 into between the plurality of stacks 10, it is preferable to provide protrusions 333 that are in abutment with upper surfaces 121 of battery cells 100 as shown in Figs. 14 to 17.

As in each of the examples shown in Figs. 10 to 13, the upper sides of the substantially U shape or V shape of insertion portion 331 may be separated, or as in each of the examples shown in Figs. 14 to 17, the upper-side opening of the substantially U shape or V-shape of insertion portion 331 may be bridged. In consideration of ease of pushing insertion portion 331 into between the plurality of stacks 10, insertion portion 331 preferably has such a structure that the upper-side opening of the substantially U-shape or V-shape is bridged as shown in Figs. 14 to 17.

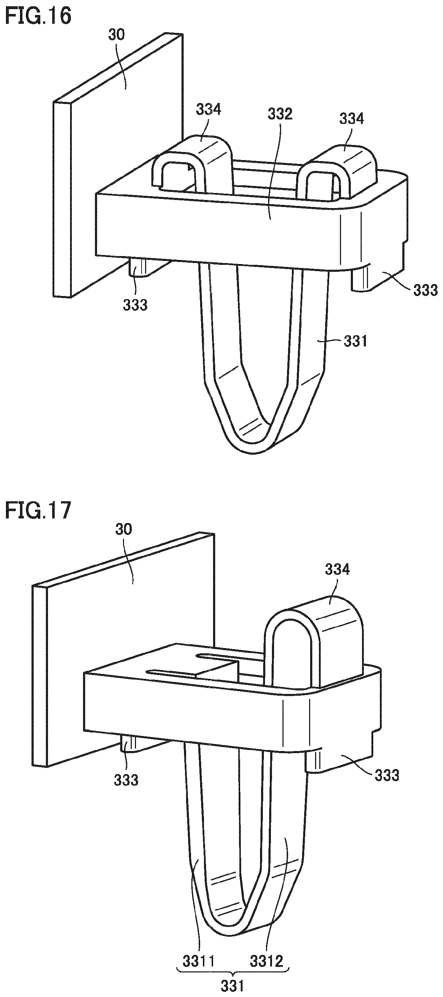

Positioning mechanism 330 shown in each of the examples of Figs. 16 and 17 further includes a protrusion 334 protruding from projecting portion 332 to the side opposite to protrusion 333 (side away from upper surface 121 of battery cell 100). In this case, protrusion 334 can be pressed when pushing insertion portion 331 into between the plurality of stacks 10.

Since battery pack 1 according to the present embodiment employs the Cell-to-Pack structure in which stacks 10 each including the plurality of battery cells 100 are directly accommodated in case 20 as described above, a member such as a binding bar in a module structure cannot be used as a member for positioning bus bar module 30.

Since battery pack 1 according to the present embodiment includes insertion portion 331 inserted (press-fitted) between the plurality of stacks 10 along the Z axis direction and is provided with positioning mechanism 330 that positions bus bar module 30 in the X axis direction, plate member 310 can be positioned in the X axis direction. Therefore, in battery pack 1 having the Cell-to-Pack structure, bus bar module 30 can be precisely positioned without providing a complicated mechanism.

It should be noted that in the present technology, all of the plurality of bus bar modules 30 may include positioning mechanisms 330 or part of the plurality of bus bar modules 30 may include positioning mechanism(s) 330.

Insertion portion 331 may have a bilaterally asymmetrical shape when viewed in the Y axis direction or may have a bilaterally symmetrical shape.

As illustrated in Figs. 14 to 17, by bringing protrusions 333 provided at the bottom portion of projecting portion 332 of positioning mechanism 330 into abutment with upper surfaces 121 of battery cells 100, the amount of pushing insertion portion 331 can be precisely managed. As a result, bus bar module 30 can be positioned more precisely in the X axis direction. It should be noted that in the present technology, each of protrusions 333 is not necessarily an essential configuration.

In battery pack 1, positioning mechanism 317 provided in plate member 310 biases side wall 21 of case 20, thereby positioning bus bar module 30 in the Y axis direction as well as the X axis direction.

In battery pack 1, protruding ribs 319 protruding from bottom surface 319A of plate member 310 toward battery cells 100 are in abutment with upper surfaces 121 of battery cells 100. Thus, by bringing protruding ribs 319 into abutment with battery cells 100, a contact area between plate member 310 and each of upper surfaces 121 of battery cells 100 can be reduced to reduce frictional resistance when plate member 310 is moved with respect to battery cells 100, with the result that plate member 310 can be positioned smoothly and precisely.

It should be noted that the shapes and arrangements of protruding ribs 319 are not limited to those shown in Fig. 7. Further, in the present technology, each protruding rib 319 is not necessarily an essential configuration.

In battery pack 1, since plate member 310 is provided with recess 318 that avoids protrusion 11A of separator 11, movement of plate member 310 in the Y axis direction is not hindered by protrusion 11A of separator 11 when positioning plate member 310 in the Y axis direction using positioning mechanism 317. Therefore, plate member 310 can be positioned smoothly and precisely.

It should be noted that in the present technology, protrusion 11A of separator 11 and recess 318 of plate member 310 are not necessarily essential configurations.

According to the present technology, by providing the positioning mechanism that is inserted between two stacks and that positions the bus bar module in the direction (second direction) orthogonal to the stacking direction, it is possible to provide a battery pack in which a bus bar module can be precisely positioned also in the Cell-to-Pack structure in which a stack including a plurality of battery cells is directly accommodated in a case.

Although the embodiments of the present invention have been described and illustrated in detail, it is clearly understood that the same is by way of illustration and example only and is not to be taken by way of limitation. The scope of the present invention is defined by the terms of the claims.

## Claims

1. A battery pack (1) comprising:
a first stack (10A) including a plurality of first battery cells (100) arranged side by side in a first direction;
a second stack (10B) that is adjacent to the first stack (10A) in a second direction orthogonal to the first direction and that includes a plurality of second battery cells (100) arranged side by side in the first direction;
a case (20) that has a side wall (21) facing the first stack (10A) and the second stack (10B) in the first direction and that accommodates the first stack (10A) and the second stack (10B);
a first bus bar module (30A) including a first bus bar (320) that electrically connects the plurality of first battery cells (100) and a first plate member (310) that accommodates the first bus bar (320), the first bus bar module (30A) being disposed on the first stack (10A); and
a second bus bar module (30B) including a second bus bar (320) that electrically connects the plurality of second battery cells (100) and a second plate member (310) that accommodates the second bus bar (320), the second bus bar module (30B) being disposed on the second stack (10B), wherein
at least one of the first bus bar module (30A) and the second bus bar module (30B) has a first positioning mechanism (330A, 330B) that has an inserted portion between the first stack (10A) and the second stack (10B) and that positions the first bus bar module (30A) or the second bus bar module (30B) in the second direction.

2. The battery pack (1) according to claim 1, wherein the inserted portion of the first positioning mechanism (330A, 330B) is press-fitted between the first stack (10A) and the second stack (10B).

3. The battery pack (1) according to claim 1 or 2, wherein the inserted portion of the first positioning mechanism (330A, 330B) has a bilaterally asymmetrical shape when viewed in the first direction.

4. The battery pack (1) according to claim 3, wherein the inserted portion of the first positioning mechanism (330A, 330B) has a thick portion (3311) and a thin portion (3312).

5. The battery pack (1) according to any one of claims 1 to 4, wherein
the first plate member (310) includes a first projecting portion (332, 332A) protruding from an end surface (312) of the first plate member (310) to the second stack (10B) side along the second direction, and
a bottom portion of the first projecting portion (332, 332A) is in abutment with at least one of the plurality of first battery cells (100) and at least one of the plurality of second battery cells (100).

6. The battery pack (1) according to claim 5, wherein
the second plate member (310) includes a second projecting portion (332) protruding from an end surface (312) of the second plate member (310) to the first stack (10A) side along the second direction, and
a bottom portion of the second projecting portion (332) is in abutment with at least one of the plurality of first battery cells (100) and at least one of the plurality of second battery cells (100).

7. The battery pack according to any one of claims 1 to 6, wherein
each of the plurality of first battery cells (100) has an upper surface (121) facing the first plate member (310),
the first plate member (310) has a bottom surface (319A) facing the upper surfaces (121) of the plurality of first battery cells (100), and
a protruding rib (319) protruding from the bottom surface (319A) of the first plate member (310) toward the upper surfaces (121) of the plurality of first battery cells (100) is provided on a portion of the bottom surface (319A) of the first plate member (310), and the protruding rib (319) is in abutment with the upper surfaces (121) of the plurality of first battery cells (100).

8. The battery pack according to any one of claims 1 to 7, wherein each of the first plate member (310) and the second plate member (310) has a second positioning mechanism (317) that positions a corresponding one of the first bus bar module (30A) and the second bus bar module (30B) in the first direction by biasing the side wall (21) of the case (20).

## Patentansprüche

1. Batteriepackung (1), aufweisend:
einen ersten Stapel (10A), welcher eine Mehrzahl von ersten Batteriezellen (100) beinhaltet, welche in einer ersten Richtung nebeneinander angeordnet sind;
einen zweiten Stapel (10B), welcher benachbart zu dem ersten Stapel (10A) in einer zweiten Richtung orthogonal zu der ersten Richtung ist, und welcher eine Mehrzahl von zweiten Batteriezellen (100) beinhaltet, welche in der ersten Richtung nebeneinander angeordnet sind;
ein Gehäuse (20), welches eine Seitenwand (21) aufweist, welche dem ersten Stapel (10A) und dem zweiten Stapel (10B) in der ersten Richtung gegenüberliegt, und in welchem der erste Stapel (10A) und der zweite Stapel (10B) aufgenommen sind;
ein erstes Sammelschienenmodul (30A), welches eine erste Sammelschiene (320) beinhaltet, welche die Mehrzahl von ersten Batteriezellen (100) und ein erstes Plattenelement (310), in welchem die erste Sammelschiene (320) aufgenommen ist, elektrisch verbindet, wobei das erste Sammelschienenmodul (30A) auf dem ersten Stapel (10A) angeordnet ist; und
ein zweites Sammelschienenmodul (30B), welches eine zweite Sammelschiene (320) beinhaltet, welche die Mehrzahl von zweiten Batteriezellen (100) und ein zweites Plattenelement (310), in welchem die zweite Sammelschiene (320) aufgenommen ist, elektrisch verbindet, wobei das zweite Sammelschienenmodul (30B) auf dem zweiten Stapel (10B) angeordnet ist, wobei
das erste Sammelschienenmodul (30A) und/oder das zweite Sammelschienenmodul (30B) einen ersten Positionierungsmechanismus (330A, 330B) aufweist, welcher einen eingefügten Abschnitt zwischen dem ersten Stapel (10A) und dem zweiten Stapel (10B) aufweist, und welcher das erste Sammelschienenmodul (30A) oder das zweite Sammelschienenmodul (30B) in der zweiten Richtung positioniert.

2. Batteriepackung (1) nach Anspruch 1, wobei der eingefügte Abschnitt des ersten Positionierungsmechanismus (330A, 330B) zwischen den ersten Stapel (10A) und den zweiten Stapel (10B) pressgepasst ist.

3. Batteriepackung (1) nach Anspruch 1 oder 2, wobei der eingefügte Abschnitt des ersten Positionierungsmechanismus (330A, 330B) aus der ersten Richtung betrachtet eine bilateral symmetrische Form aufweist.

4. Batteriepackung (1) nach Anspruch 3, wobei der eingefügte Abschnitt des ersten Positionierungsmechanismus (330A, 330B) einen dicken Abschnitt (3311) und einen dünnen Abschnitt (3312) aufweist.

5. Batteriepackung (1) nach einem der Ansprüche 1 bis 4, wobei
das erste Plattenelement (310) einen ersten vorstehenden Abschnitt (332, 332A) beinhaltet, welcher von einer Endoberfläche (312) des ersten Plattenelements (310) zu der Seite des zweiten Stapels (10B) entlang der zweiten Richtung vorsteht, und
ein unterer Abschnitt des ersten vorstehenden Abschnitts (332, 332A) an zumindest einer von der Mehrzahl von ersten Batteriezellen (100) und zumindest einer von der Mehrzahl von zweiten Batteriezellen (100) anliegt.

6. Batteriepackung (1) nach Anspruch 5, wobei
das zweite Plattenelement (310) einen zweiten vorstehenden Abschnitt (332) beinhaltet, welcher von einer Endoberfläche (312) des zweiten Plattenelements (310) zu der Seite des ersten Stapels (10A) entlang der zweiten Richtung vorsteht, und
ein unterer Abschnitt des zweiten vorstehenden Abschnitts (332, 332A) an zumindest einer von der Mehrzahl von ersten Batteriezellen (100) und zumindest einer von der Mehrzahl von zweiten Batteriezellen (100) anliegt.

7. Batteriepackung nach einem der Ansprüche 1 bis 6, wobei
jeder von der Mehrzahl von ersten Batteriezellen (100) eine obere Oberfläche (121) aufweist, welche dem ersten Plattenelement (310) gegenüberliegt,
ein erstes Plattenelement (310) eine untere Oberfläche (319A) aufweist, welche den oberen Oberflächen (121) von der Mehrzahl von ersten Batteriezellen (100) gegenüberliegt, und
eine vorstehende Rippe (319), welche von der unteren Oberfläche (319A) des ersten Plattenelements (310) in Richtung auf die oberen Oberflächen (121) von der Mehrzahl von ersten Batteriezellen (100) vorsteht, auf einem Abschnitt der unteren Oberfläche (319A) des ersten Plattenelements (310) angeordnet ist, und wobei die vorstehende Rippe (319) an den oberen Oberflächen (121) von der Mehrzahl der ersten Batteriezellen (100) anliegt.

8. Batteriepackung nach einem der Ansprüche 1 bis 7, wobei das erste Plattenelement (310) und das zweite Plattenelement (310) jeweils einen zweiten Positionierungsmechanismus (317) aufweisen, welcher ein entsprechendes von dem ersten Sammelschienenmodul (30A) und dem zweiten Sammelschienenmodul (30B) in der ersten Richtung positioniert, indem die Seitenwand (21) des Gehäuses (20) vorgespannt wird.

## Revendications

1. Un bloc-batterie (1) comprenant :
une première pile (10A) comprenant une pluralité de premières cellules de batterie (100) disposées côte à côte dans une première direction ;
une deuxième pile (10B) qui est adjacente à la première pile (10A) dans une deuxième direction orthogonale à la première direction et qui comprend une pluralité de deuxièmes cellules de batterie (100) disposées côte à côte dans la première direction ;
un boîtier (20) qui comporte une paroi latérale (21) faisant face à la première pile (10A) et à la deuxième pile (10B) dans la première direction et qui loge la première pile (10A) et la deuxième pile (10B) ;
un premier module de barre omnibus (30A) comprenant une première barre omnibus (320) qui relie électriquement la pluralité de premières cellules de batterie (100) et un premier élément de plaque (310) qui loge la première barre omnibus (320),
le premier module de barre omnibus (30A) étant disposé sur la première pile (10A) ; et
un deuxième module de barre omnibus (30B) comprenant une deuxième barre omnibus (320) qui relie électriquement la pluralité de deuxièmes cellules de batterie (100) et un deuxième élément de plaque (310) qui loge la deuxième barre omnibus (320), le deuxième module de barre omnibus (30B) étant disposé sur la deuxième pile (10B), dans lequel
au moins l'un parmi le premier module de barre omnibus (30A) et le deuxième module de barre omnibus (30B) comporte un premier mécanisme de positionnement (330A, 330B) qui comporte une partie insérée entre la première pile (10A) et la deuxième pile (10B) et qui positionne le premier module de barres omnibus (30A) ou le deuxième module de barres omnibus (30B) dans la deuxième direction.

2. Le bloc-batterie (1) selon la revendication 1, dans lequel la partie insérée du premier mécanisme de positionnement (330A, 330B) est emmanchée à la presse entre la première pile (10A) et la deuxième pile (10B).

3. Le bloc-batterie (1) selon la revendication 1 ou 2, dans lequel la partie insérée du premier mécanisme de positionnement (330A, 330B) présente une forme asymétrique bilatérale lorsqu'on la regarde dans la première direction.

4. Le bloc-batterie (1) selon la revendication 3, dans lequel la partie insérée du premier mécanisme de positionnement (330A, 330B) comporte une partie épaisse (3311) et une partie mince (3312).

5. Le bloc-batterie (1) selon l'une des revendications 1 à 4, dans lequel
le premier élément de plaque (310) comprend une première partie en saillie (332, 332A) faisant saillie depuis une surface d'extrémité (312) du premier élément de plaque (310) vers le côté de la deuxième pile (10B) le long de la deuxième direction, et
une partie inférieure de la première partie en saillie (332, 332A) est en butée avec au moins une parmi la pluralité de premières cellules de batterie (100) et au moins une parmi la pluralité de secondes cellules de batterie (100).

6. Le bloc-batterie (1) selon la revendication 5, dans lequel
le deuxième élément de plaque (310) comprend une deuxième partie en saillie (332) dépassant d'une surface d'extrémité (312) du deuxième élément de plaque (310) vers le côté de la première pile (10A) le long de la deuxième direction, et
une partie inférieure de la deuxième partie en saillie (332) est en butée avec au moins une de la pluralité de premières cellules de batterie (100) et au moins une de la pluralité de deuxièmes cellules de batterie (100).

7. Le bloc-batterie selon l'une des revendications 1 à 6, dans lequel
chacune des multiples premières cellules de batterie (100) comporte une surface supérieure (121) faisant face au premier élément de plaque (310),
le premier élément de plaque (310) comporte une surface inférieure (319A) faisant face aux surfaces supérieures (121) des multiples premières cellules de batterie (100), et
une nervure saillante (319) faisant saillie depuis la surface inférieure (319A) du premier élément de plaque (310) vers les surfaces supérieures (121) de la pluralité de premières cellules de batterie (100) est prévue sur une partie de la surface inférieure (319A) du premier élément de plaque (310), et la nervure saillante (319) est en butée avec les surfaces supérieures (121) de la pluralité de premières cellules de batterie (100).

8. Le bloc-batterie selon l'une des revendications 1 à 7, dans lequel chacun des premier élément de plaque (310) et deuxième élément de plaque (310) comporte un deuxième mécanisme de positionnement (317) qui positionne l'un correspondant parmi le premier module de barre omnibus (30A) et le deuxième module de barre omnibus (30B) dans la première direction en sollicitant la paroi latérale (21) du boîtier (20).
